# EUROPÄISCHE PATENTANMELDUNG

(11) **EP 1 443 376 A2**
(43) Veröffentlichungstag der Anmeldung: **04.08.2004**
(21) Anmeldenummer: 04002245.1
(22) Anmeldetag: 02.02.2004
(51) Int. Cl.: G05D 16/06

(54) **Brennstoffdruckregler für ein Fahrzeugheizgerät**

(30) Priorität: 03.02.2003 DE 10304260
(71) Anmelder: J. Eberspächer GmbH Co. KG, 73730 Esslingen (DE)
(72) Erfinder: Humburg, Michael, 73035 Göppingen (DE)
(74) Vertreter: Ruttensperger, Bernhard, Dipl.-Phys.

(57) **Zusammenfassung**

Ein Brennstoffdruckregler zur Einstellung des Drucks des zu einer Heizeinrichtung, insbesondere Fahrzeugheizeinrichtung, zuzuführenden flüssigen Brennstoffs umfasst eine in einem Gehäuse (32) gebildete Druckkammer (58) mit einer Einlassöffnung (74) zur Aufnahme von unter Druck stehendem flüssigem Brennstoff und einer Auslassöffnung (76) zur Abgabe von flüssigem Brennstoff, wobei die Druckkammer (58) bereichsweise durch ein unter dem Brennstoffdruck lageveränderliches Begrenzungsorgan (44) begrenzt ist, sowie ein der Einlassöffnung (74) zugeordnetes Verschlusselement (64), welches in Richtung Öffnen der Einlassöffnung (74) beaufschlagbar ist zumindest durch den Brennstoffdruck des durch die Einlassöffnung (74) in die Druckkammer (58) zu leitenden Brennstoffs, und in Richtung Verschließen der Einlassöffnung (74) beaufschlagbar ist durch eine mit dem lageveränderlichen Begrenzungsorgan (44) gekoppelte Beaufschlagungsanordnung (80, 84).

## Beschreibung

Die vorliegende Erfindung betrifft einen Brennstoffdruckregler zur Einstellung des Drucks des zu einer Heizeinrichtung, insbesondere Fahrzeugheizeinrichtung, zuzuführenden flüssigen Brennstoffs.

Bei Fahrzeugheizsystemen, bei welchen beispielsweise unter Einsatz einer sog. Standheizung oder eines Zuheizers ein zu erwärmendes Medium erwärmt wird, wird dem Heizgerät über eine Dosierpumpeinrichtung der Brennstoff von einem Brennstoffversorgungssystem zugeführt. Die Dosierpumpeinrichtung fördert den Brennstoff in genau eingestellter Menge zum Heizgerät, um das gewünschte Verbrennungsverhalten dort zu erlangen. Die Dosierpumpeinrichtung selbst nimmt den Brennstoff von einem System auf, welches einen Brennstoffdruck aufweist oder einstellt, der im Allgemeinen deutlich über demjenigen Brennstoffdruck liegt, mit welchem eine Dosierpumpeinrichtung einlassseitig zur Sicherstellung einer exakten Brennstoffdosierung beaufschlagt werden kann. Während beispielsweise Dosierpumpeinrichtungen bekannter Bauart bei einem maximalen Brennstoffüberdruck in der Zuführleitung von 0,3 bar arbeiten können, wird häufig in Brennstoffzuführsystemen ein Brennstoffüberdruck von mehr als 1 bar erzeugt. Es werden daher der Dosierpumpeinrichtung im Allgemeinen Brennstoffdruckregler oder Brennstoffdruckminderer vorgeschaltet, die die Aufgabe haben, zwischen dem Brennstoffversorgungssystem und der Dosierpumpeinrichtung eine Herabsetzung des Brennstoffdrucks auf einen für die Verwendung in der Dosierpumpeinrichtung geeigneten Wert zu erlangen.

Es ist die Aufgabe der vorliegenden Erfindung, einen Brennstoffdruckregler bereitzustellen, welcher bei zuverlässiger Wirkungsweise einen einfachen und kompakten Aufbau aufweist.

Gemäß der vorliegenden Erfindung wird diese Aufgabe gelöst durch einen Brennstoffdruckregler zur Einstellung des Drucks des zu einer Heizeinrichtung, insbesondere Fahrzeugheizeinrichtung, zuzuführenden flüssigen Brennstoffs, umfassend eine in einem Gehäuse gebildete Druckkammer mit einer Einlassöffnung zur Aufnahme von unter Druck stehendem flüssigem Brennstoff und einer Auslassöffnung zur Abgabe von flüssigem Brennstoff, wobei die Druckkammer bereichsweise durch eine unter dem Brennstoffdruck lageveränderliches Begrenzungsorgan begrenzt ist, sowie ein der Einlassöffnung zugeordnetes Verschlusselement, welches in Richtung Öffnen der Einlassöffnung beaufschlagbar ist zumindest durch den Brennstoffdruck des durch die Einlassöffnung in die Druckkammer zu leitenden Brennstoffs, und in Richtung Verschließen der Einlassöffnung beaufschlagbar ist durch eine mit dem lageveränderlichen Begrenzungsorgan gekoppelte Beaufschlagungsanordnung.

Dabei kann beispielsweise die Beaufschlagungsanordnung ein an dem Begrenzungsorgan getragenes und gegen das Verschlusselement pressbares Beaufschlagungselement umfassen.

Um in definierter Art und Weise die Druckregelcharakteristik beeinflussen zu können, wird vorgeschlagen, dass eine Sitzfläche, an welcher das Verschlusselement zum Verschließen der Einlassöffnung in Anlage bringbar ist, bezüglich der Druckkammer lageveränderlich ist.

Ein unter den gegebenen Dichtigkeitsanforderungen sehr einfach zu realisierender Aufbau kann vorsehen, dass das Begrenzungsorgan eine mit dem Gehäuse gekoppelte, brennstoffundurchlässige Membran umfasst. Hier können für die Membran verschiedene Materialien, wie z.B. gummielastisches Material, Metallmaterial o. dgl., eingesetzt werden, wobei beispielsweise bei Einsatz eines Metallmaterials zum Bereitstellen der erforderlichen Verformbarkeit eine gewellte bzw. balgenartige Struktur bereitgestellt werden kann.

Um eine definierte Auslenkung der Membran in Abhängigkeit von den Druckverhältnissen erlangen zu können, wird vorgeschlagen, dass die Membran in einem Außenrandbereich und einem Innenrandbereich festgelegt ist und in einem zwischen dem Außenrandbereich und dem Innenrandbereich gelegenen Zwischenbereich in Abhängigkeit von dem in der Druckkammer vorherrschenden Druck lageveränderlich ist. Dabei kann der Zwischenbereich im Wesentlichen ringartig, beispielsweise kreisringartig, ausgebildet sein.

Gemäß einem weiteren besonders vorteilhaften Aspekt der vorliegenden Erfindung kann vorgesehen sein, dass die Membran an ihrem Innenrandbereich mit einem Gehäuseteil fest verbunden ist, an welchem die Einlassöffnung ausgebildet ist. Es wird somit erreicht, dass der Brennstoff in die Druckkammer durch das Begrenzungsorgan, also beispielsweise eine Membran, hindurch eingeleitet wird, was zu einem sehr kompakten Aufbau führt. Insbesondere kann in diesem Fall erreicht werden, dass die Brennstoffeinleitungsrichtung im Wesentlichen derjenigen Richtung entgegengesetzt ist, in welcher das Begrenzungsorgan, also beispielsweise die Membran, bei Druckerhöhung sich verlagert. Auf diese Art und Weise kann auch die Zusammenwirkung des Verschlusselements mit der Beaufschlagungsanordnung erleichtert werden.

Beispielsweise kann weiterhin vorgesehen sein, dass die Membran an ihrem Innenrandbereich mit einem Gehäuseteil fest verbunden ist, an welchem ein die Sitzfläche bereitstellendes Sitzelement lageveränderlich getragen ist.

Um sicherzustellen, dass unabhängig von äußeren Einflüssen und ggf. auch unabhängig von Alterungserscheinungen das Verschlusselement immer in einem definierten Zustand ist, kann eine Vorspannanordnung vorgesehen sein zum Vorspannen des Verschlusselements in Richtung Verschließen der Einlassöffnung. Die Vorspannanordnung kann beispielsweise eine die Beaufschlagungsanordnung gegen das Verschlusselement vorspannende Vorspannfeder umfassen.

Bei der Integration zusätzlicher Heizgeräte in ein Fahrzeug besteht allgemein das Problem, dass der für derartige Zusatzaggregate zur Verfügung stehende Bauraum sehr begrenzt ist. Dies bedeutet, dass diese Zusatzaggregate und auch deren zugehörige Systembereiche so kompakt als möglich aufgebaut sein sollen. Gemäß einem weiteren vorteilhaften Aspekt kann daher vorgesehen sein, dass ein die Druckkammer in Zusammenwirkung mit dem Begrenzungsorgan begrenzendes Gehäuseteil ein Gehäuseteil einer Dosierpumpanordnung bildet. Auf diese Art und Weise kann der erfindungsgemäße Brennstoffdruckregler mit einer Dosierpumpanordnung zum Aufbau eines integrierten Brennstoffdruckregler/Dosierpump-Systems zusammengefügt werden. Dabei kann beispielsweise vorgesehen sein, dass die Auslassöffnung der Druckkammer eine Einlassöffnung der Dosierpumpanordnung bildet.

Gemäß einem weiteren Aspekt betrifft die vorliegende Erfindung eine Kombination einer Dosierpumpanordnung für ein brennstoffbetriebenes Fahrzeugheizgerät mit einem Brennstoffdruckregler, wobei ein eine Druckkammer des Brennstoffdruckreglers begrenzendes und eine Auslassöffnung dafür bereitstellendes Gehäuse einen Einlasskammerbereich der Dosierpumpanordnung begrenzt und eine Einlassöffnung dafür bereitstellt.

Die vorliegende Erfindung wird nachfolgend mit Bezug auf die beiliegenden Zeichnungen beschrieben. Es zeigt:
- Fig. 1: eine Teil-Längsschnittansicht einer Brennstoffdosierpumpanordnung;
- Fig. 2: eine Längsschnittansicht eines vorzugsweise mit der in Fig. 1 gezeigten Anordnung kombinierbaren Brennstoffdruckreglers.

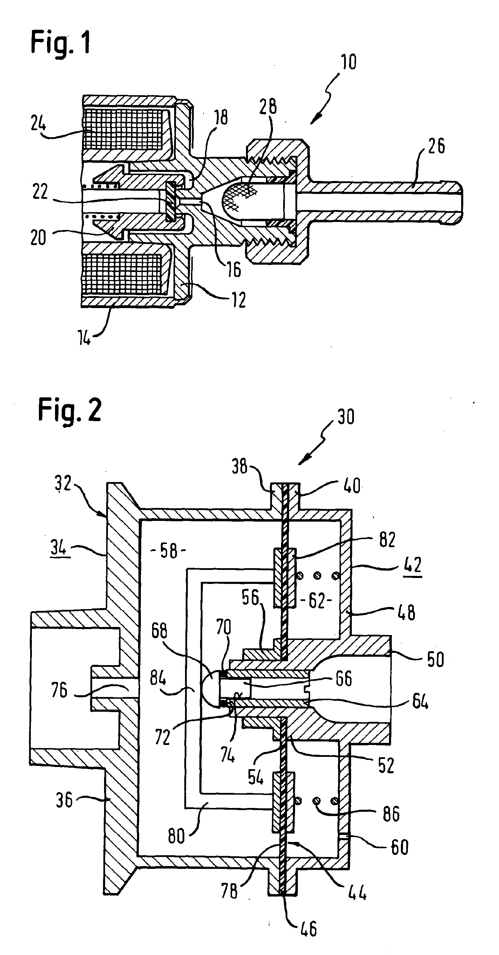

In Fig. 1 ist ein Teilbereich einer Brennstoffdosierpumpanordnung 10 im Längsschnitt dargestellt. Ein Gehäuseboden 12 ist mit einem zylindrischen Außengehäuse 14 fest verbunden. Im Gehäuseboden 12 ist eine Öffnung 16 ausgebildet, welche eine Einlassöffnung zu einem Einlassbereich 18 der Dosierpumpanordnung 10 bildet. Ein Einlassventilelement 20 ist durch Federvorspannung mit einem daran getragenen Abdichtelement 22 gegen den die Einlassöffnung 16 umgebenden Bereich des Gehäusebodens bzw. Gehäuseteils 12 vorgespannt. Durch Erregung eines elektromagnetischen Antriebs 24 kann das Ventilelement 20 entgegen der Federvorspannung verschoben werden, so dass es die Einlassöffnung 16 freigibt und Brennstoff in den Einlassbereich 18 strömen kann.

Der grundsätzliche Aufbau einer derartigen Dosierpumpanordnung 10 ist bekannt und wird hier nicht weiter beschrieben. Es sei beispielsweise verwiesen auf die DE 101 03 224 C1 bzw. die DE 101 09 948 A1, in welchen Druckschriften der Aufbau die Funktionsweise einer derartigen Dosierpumpanordnung 10 detailliert beschrieben sind. Der Offenbarungsgehalt dieser beiden Druckschriften wird hiermit durch Bezugnahme zum Offenbarungsgehalt der vorliegenden Anmeldung aufgenommen.

Eine derartige Dosierpumpanordnung 10 dient dazu, den von einem Brennstoffversorgungssystem durch einen Einlassstutzen 26 und ggf. einen Brennstofffilter 28 zugeführten Brennstoff in dosierter Art und Weise zu einem Fahrzeugheizgerät zu leiten. Dabei muss jedoch darauf geachtet werden, dass der an der Einlassöffnung 16 anliegende Brennstoffdruck nicht so groß ist, dass er in einer Phase, in welcher kein Brennstoff aufgenommen werden soll, das Ventilelement 20 entgegen seiner Federvorspannung verschieben kann. Es wird daher einer derartigen Brennstoffdosierpumpanordnung 10 gemäß den Prinzipien der vorliegenden Erfindung ein in Fig. 2 dargestellter Brennstoffdruckregler 30 vorgeschaltet. Dieser dient dazu, den in der Brennstoffversorgungsleitung vorherrschenden Brennstoffdruck von beispielsweise 1 bar Überdruck auf weniger als 0,3 bar Überdruck zu verringern.

Der Brennstoffdruckregler 30 weist, wie in Fig. 2 erkennbar, ein allgemein mit 32 bezeichnetes Gehäuse auf. Dabei ersetzt ein Gehäuseteil 34 dieses Gehäuses 32 das in der Fig. 1 erkennbare Gehäuseteil 12 der Dosierpumpanordnung, so dass der erfindungsgemäße Brennstoffdruckregler 30 integriert werden kann in die Brennstoffdosierpumpanordnung 10. Es lässt sich somit eine sehr kompakt bauende und einfach gestaltete Anordnung erzielen. Man erkennt vor allem in Fig. 2, dass ein Bodenbereich 36 des Gehäuseteils 34 so gestaltet ist, dass durch Zusammenwirkung mit dem Ventilelement 20 wieder die wahlweise Freigabe bzw. das wahlweise Abschlieβen des Einlassbereichs 18 der Dosierpumpanordnung 10 erlangt werden kann.

Zwischen einem flanschartigen Randbereich 38 des Gehäuseteils 34 und einem entsprechend geformten flanschartigen Randbereich 40 eines weiteren Gehäuseteils 42 ist eine Membran 44 mit einem Außenrandbereich 46 derselben eingespannt. Die beiden flanschartigen Randbereiche 38, 40 können durch Verschraubung, Verklemmung oder in sonstiger Art und Weise fest miteinander verbunden werden, so dass in Zusammenwirkung mit der Membran 40 auch ein dichter Abschluss erlangt wird.

An einem Bodenbereich 48 des Gehäuseteils 42, welcher dem Bodenbereich 36 des Gehäuseteils 34 gegenüber liegt, ist in einem zentralen Bereich ein Einlassabschnitt 50 des Brennstoffdruckreglers 30 ausgebildet. An einem stufenartigen Übergangsbereich 52 dieses Einlassabschnitts 50 liegt die Membran 44 mit ihrem Innenrandbereich 54 auf und ist durch ein beispielsweise auf den Einlassabschnitt 50 geschraubtes Widerlagerelement 56 dort unter Bildung eines flüssigkeitsdichten Abschlusses festgelegt. Mit ihrem Außenrandbereich 46 und ihrem Innenrandbereich 54 ist somit die Membran 44 an dem Gehäuse 32 bzw. den beiden Gehäuseteilen 34, 42 desselben festgelegt. Es wird somit der Innenraum des Gehäuses 32 in eine Druckkammer 58 und eine zur Umgebung hin durch mindestens eine Öffnung 60 offene Entlastungskammer 62 unterteilt.

An dem Einlassabschnitt 50 ist weiterhin beispielsweise durch Gewindeeingriff ein Sitzelement 64 getragen, wobei durch den angesprochenen Gewindeeingriff bei Drehung des Sitzelements 64 dessen Lage bezüglich des Einlassabschnitts 50 und somit auch bezüglich der Druckkammer 58 in der Darstellung der Fig. 2 in Richtung von rechts nach links bzw. in entgegengesetzter Richtung veränderbar ist. In einer zentralen Einlassöffnung 74 des Sitzelements 64 ist ein Verschlusselement 66 aufgenommen, das mit einem erweiterten Kopfbereich 68 unter Zwischenlagerung eines O-ringartigen Dichtelements 70 auf einer Sitzfläche 72 des Sitzelements 64 zur Auflage bringbar ist. Je nach Lage des Verschlusselements 66 kann somit die in dem Sitzelement 64 gebildete Einlassöffnung 74 zur Druckkammer 58 abgeschlossen oder freigegeben werden. Hier kann beispielsweise der in dieser Einlassöffnung oder Bohrung 74 sitzende Schaftbereich des Verschlusselements 66 konisch geformt sein oder einen geringeren Durchmesser aufweisen, als die Einlassöffnung 74, so dass dann, wenn das Dichtelement 70 von der Sitzfläche 72 abhebt, Brennstoff, nachdem er beispielsweise den auch in Fig. 1 erkennbaren Brennstofffilter 28 durchströmt hat, in die Druckkammer 58 einströmen kann. Eine im Bodenbereich 36 des Gehäuseteils 14 gebildete Auslassöffnung 76 der Druckkammer 58, welche bei Verbindung mit der Dosierpumpanordnung 10 dann auch die in Fig. 1 erkennbare Einlassöffnung 16 für den Einlassbereich 18 der Dosierpumpanordnung 10 bereitstellt, ist normalerweise, also beispielsweise in dem in Fig. 1 erkennbaren Zustand, durch das Ventilelement 20 bzw. das Dichtelement 22 der Dosierpumpanordnung 10 abgeschlossen.

An einem zwischen dem Außenrandbereich 46 und dem Innenrandbereich 54 gebildeten Zwischenbereich 78 der Membran 44 ist in einer den Einlassabschnitt 50 und somit auch den Kopfbereich 68 des Verschlusselements 66 überbrückenden Art und Weise ein bügelartiges Beaufschlagungselement 80 durch Zusammenfügung mit die Membran 44 im Zwischenbereich 78 dann einspannenden Gegenelementen 82 festgelegt. Ein Überbrückungsbereich 84 dieses Beaufschlagungselements 80 liegt über dem Kopf 68 des Verschlusselements 66. Eine Verlagerung des Zwischenbereichs 78 der Membran 44 in der Darstellung der Fig. 2 nach rechts, welche ausgelöst werden kann durch Brennstoffzufuhr in die Druckkammer 58, hat zur Folge, dass der Überbrückungsbereich 84 den Kopfbereich 68 des Verschlusselements 66 beaufschlagt und diesen zusammen mit dem Dichtelement 70 gegen die Sitzfläche 72 presst. Eine weitere Brennstoffzufuhr wird damit unterbunden bzw. erschwert. Da bei dieser Beaufschlagungsbewegung der Membran 44 und somit auch des Beaufschlagungselements 80 sich das Volumen der Druckkammer 58 vergrößert, findet gleichzeitig eine Druckentspannung statt, was zur Folge hat, dass eine übermäßige Druckbeaufschlagung des Ventilelements 20 auch bedingt durch die verhinderte weitere Brennstoffzufuhr vermieden werden kann. Erst wenn beispielsweise in einem Einlasstakt das Ventilelement 20 die Einlassöffnung 16 bzw. die Auslassöffnung 76 freigibt, nimmt der Brennstoffdruck in der Druckkammer 58 ab, so dass die Membran 44 in ihrem Zwischenbereich 78 sich nach links, also im Sinne einer Verringerung des Druckkammervolumens 58 und zum Freigeben des Verschlusselements 66 verlagert. Da dieses an seinem von der Druckkammer 58 abgewandt liegenden Endbereich durch den mit höherem Druck zugeführten Brennstoff beaufschlagt ist, wird es mit dem Dichtelement 70 von der Sitzfläche 72 abheben und somit erneut eine Brennstoffzufuhr zur Druckkammer 58 zulassen.

Um dafür zu sorgen, dass das Beaufschlagungselement 80 und somit auch das Verschlusselement 66 unabhängig von den Druckverhältnissen und unabhängig vom alterungsbedingten Zustand der Membran 44 in einer definierten Betriebslage bleiben bzw. sind, ist eine beispielsweise als Schraubenzugfeder ausgebildete Vorspannfeder 86 vorgesehen, welche in der Ausgestaltungsform gemäß Fig. 2 dafür sorgt, dass die Membran 44 mit ihrem Zwischenbereich 78 in Richtung auf den Bodenbereich 48 des Gehäuseteils 42 zu gezogen wird. Auf diese Art und Weise presst das Beaufschlagungselement 80 mit seinem Überbrückungsbereich 84 das Verschlusselement 66 in seine Schließstellung. Durch die Einstellung dieser Vorspannung und auch durch die einstellbare Lage des Sitzelements 64 bezüglich des Einlassabschnitts 50 wird also eine Vorspannlast vorgegeben, welche wiederum bestimmt, wie groß der am Einlassabschnitt 50 vorherrschende Brennstoffdruck sein muss, um das Verschlusselement 66 entgegen der auf dieses einwirkenden Vorspannung vom Sitzelement 64 abzuheben. Daraus erkennt man, dass auf das Verschlusselement 66 die folgenden Kräfte einwirken: In Richtung Öffnen, also in Richtung Abheben vom Sitzelement 64, wirkt die durch den Druck des zugeführten Brennstoffs auf den von der Druckkammer abgewandt liegenden Bereich des Verschlusselements 66 ausgeübte Druckkraft. In Richtung Verschließen der Einlassöffnung 74 wirkt eine Kraft, die sich zusammensetzt aus der Federkraft der Vorspannfeder 86, der durch den Brennstoffdruck in der Druckkammer 58 auf den Zwischenbereich 78 der Membran 44 ausgeübten Kraft und der durch den Brennstoffdruck in der Druckkammer 58 unmittelbar auf den erweiterten Kopfbereich 68 des Verschlusselements 66 ausgeübten Kraft. Durch entsprechende Auswahl der Verhältnisse der verschiedenen Oberflächen und selbstverständlich auch der Federcharakteristik der Vorspannfeder 86 sowie der Elastizitäts- bzw. Federcharakteristik der Membran 44 kann also neben der durch die Verstellbarkeit des Sitzelements 64 gegebenen Einstellbarkeit die Wirkcharakteristik des Brennstoffdruckreglers 30 beeinflusst bzw. vorgegeben werden.

Da bei dem erfindungsgemäßen Brennstoffdruckregler 30 der Brennstoff durch den zentralen Bereich der Membran 44 hindurchgeleitet wird, kann durch Zusammenwirken dieser Membran 44 mit dem Beaufschlagungselement 80 ein sehr einfacher Mechanismus realisiert werden, welcher das druckbedingte Einströmen von Brennstoff in die Druckkammer 58 zulässt bzw. unterbindet. Es sind keine Umlenkhebelmechanismen o. dgl. erforderlich. Weiter kann durch das Bereitstellen des Gehäuseteils 34 mit einem Bodenbereich 36, welcher auch einen Gehäuseboden der Dosierpumpanordnung 10 bildet, ein äußerst kompakter bzw. integrierter Aufbau erlangt werden. Dadurch wird weiter erlangt, dass die Einströmrichtung des in die Druckkammer 58 eingeleiteten Brennstoffs beim Durchströmen der Einlassöffnung 74 im Wesentlichen entgegengesetzt ist zur brennstoffdruckbedingten Verlagerung der Membran 44 in ihrem Zwischenbereich 78 und somit auch des Überbrückungsbereichs 84 des Beaufschlagungselements 80 bzw. der dabei dann induzierten Verschiebung des Verschlusselements 66.

Die Membran 44 kann beispielsweise aus Gummi oder gummiartigem bzw. gummielastischem Material aufgebaut sein, wobei auf die Brennstoffresistenz desselben zu achten ist. Auch dünne Metallmaterialien kommen hier in Frage, wobei in diesem Falle beispielsweise zum Bereitstellen der erforderlichen Verformbarkeit bzw. Elastizität eine balgenartige Formgebung derselben vorteilhaft sein kann. Selbstverständlich kann die Funktion der Vorspannfeder 86 auch in die Membran 44 verlagert werden, so dass beispielsweise diese unter Vorspannung eingebaut wird. Insbesondere zum Entgegenwirken einer möglichen alterungsbedingten Änderung der Betriebscharakteristik ist es vorteilhaft, eine zusätzliche Feder- bzw. Vorspannanordnung bereitzustellen. Diese kann selbstverständlich auch an der der Druckkammer 58 zugewandten Seite der Membran 44 liegen und dann beispielsweise als Schraubendruckfeder oder sonstige Druckfeder ausgebildet sein.

## Patentansprüche

1. Brennstoffdruckregler zur Einstellung des Drucks des zu einer Heizeinrichtung, insbesondere Fahrzeugheizeinrichtung, zuzuführenden flüssigen Brennstoffs, umfassend:
- eine in einem Gehäuse (32) gebildete Druckkammer (58) mit einer Einlassöffnung (74) zur Aufnahme von unter Druck stehendem flüssigem Brennstoff und einer Auslassöffnung (76) zur Abgabe von flüssigem Brennstoff, wobei die Druckkammer (58) bereichsweise durch ein unter dem Brennstoffdruck lageveränderliches Begrenzungsorgan (44) begrenzt ist,
- ein der Einlassöffnung (74) zugeordnetes Verschlusselement (64), welches in Richtung Öffnen der Einlassöffnung (74) beaufschlagbar ist zumindest durch den Brennstoffdruck des durch die Einlassöffnung (74) in die Druckkammer (58) zu leitenden Brennstoffs, und in Richtung Verschließen der Einlassöffnung (74) beaufschlagbar ist durch eine mit dem lageveränderlichen Begrenzungsorgan (44) gekoppelte Beaufschlagungsanordnung (80, 84).

2. Brennstoffdruckregler nach Anspruch 1,
**dadurch gekennzeichnet, dass** die Beaufschlagungsanordnung (80, 84) ein an dem Begrenzungsorgan (44) getragenes und gegen das Verschlusselement (66) pressbares Beaufschlagungselement (80) umfasst.

3. Brennstoffdruckregler nach Anspruch 1 oder 2,
**dadurch gekennzeichnet, dass** eine Sitzfläche (72), an welcher das Verschlusselement (66) zum Verschließen der Einlassöffnung (74) in Anlage bringbar ist, bezüglich der Druckkammer (58) lageveränderlich ist.

4. Brennstoffdruckregler nach einem der Ansprüche 1 bis 3,
**dadurch gekennzeichnet, dass** das Begrenzungsorgan (44) eine mit dem Gehäuse (32) gekoppelte, brennstoffundurchlässige Membran (44) umfasst.

5. Brennstoffdruckregler nach Anspruch 4,
**dadurch gekennzeichnet, dass** die Membran (44) in einem Außenrandbereich (46) und einem Innenrandbereich (54) festgelegt ist und in einem zwischen dem Außenrandbereich (46) und dem Innenrandbereich (54) gelegenen Zwischenbereich (78) in Abhängigkeit von dem in der Druckkammer (58) vorherrschenden Druck lageveränderlich ist.

6. Brennstoffdruckregler nach Anspruch 5,
**dadurch gekennzeichnet, dass** der Zwischenbereich (78) im Wesentlichen ringartig ausgebildet ist.

7. Brennstoffdruckregler nach einem der Ansprüche 1 bis 6,
**dadurch gekennzeichnet, dass** die Membran (44) an ihrem Innenrandbereich (54) mit einem Gehäuseteil (42) fest verbunden ist, an welchem die Einlassöffnung (74) ausgebildet ist.

8. Brennstoffdruckregler nach Anspruch 3 und einem der Ansprüche 5 bis 7,
**dadurch gekennzeichnet, dass** die Membran (44) an ihrem Innenrandbereich (54) mit einem Gehäuseteil (42) fest verbunden ist, an welchem ein die Sitzfläche (72) bereitstellendes Sitzelement (64) lageveränderlich getragen ist.

9. Brennstoffdruckregler nach einem der Ansprüche 1 bis 8,
**gekennzeichnet durch** eine Vorspannanordnung (86) zum Vorspannen des Verschlusselements (66) in Richtung Verschließen der Einlassöffnung (74).

10. Brennstoffdruckregler nach Anspruch 9,
**dadurch gekennzeichnet, dass** die Vorspannanordnung (86) eine die Beaufschlagungsanordnung (80, 84) gegen das Verschlusselement (66) vorspannende Vorspannfeder (86) umfasst.

11. Brennstoffdruckregler nach einem der Ansprüche 1 bis 10,
**dadurch gekennzeichnet, dass** ein die Druckkammer (58) in Zusammenwirkung mit dem Begrenzungsorgan (44) begrenzendes Gehäuseteil (34) ein Gehäuseteil (12) einer Dosierpumpanordnung (10) bildet.

12. Brennstoffdruckregler nach Anspruch 11,
**dadurch gekennzeichnet, dass** die Auslassöffnung (76) der Druckkammer (58) eine Einlassöffnung (16) der Dosierpumpanordnung (10) bildet.

13. Kombination einer Dosierpumpanordnung (10) für ein brennstoffbetriebenes Fahrzeugheizgerät mit einem Brennstoffdruckregler (30), insbesondere nach einem der vorangehenden Ansprüche, wobei ein eine Druckkammer (58) des Brennstoffdruckreglers (30) begrenzendes und eine Auslassöffnung (76) dafür bereitstellendes Gehäuse (34) einen Einlasskammerbereich (18) der Dosierpumpanordnung (10) begrenzt und eine Einlassöffnung (16) dafür bereitstellt.
